# EUROPÄISCHE PATENTSCHRIFT

(11) **EP 2 448 770 B1**
(45) Veröffentlichungstag und Bekanntmachung des Hinweises auf die Patenterteilung: **06.03.2013**
(21) Anmeldenummer: 10718141.4
(22) Anmeldetag: 29.04.2010
(51) Int. Cl.: B60B 27/00, F16C 33/72, G01P 3/44, F16P 3/14, G06K 9/00, G06T 7/20, G07D 7/20, G01P 1/02, H04N 13/00

(54) **KAPPE ZUM EINBAU AUF EIN RADLAGER, RADLAGERMODUL MIT EINER SOLCHEN KAPPE UND VERFAHREN ZUR HERSTELLUNG EINER KAPPE ZUM EINBAU AUF EIN RADLAGER**
COVER FOR MOUNTING ON A WHEEL BEARING, WHEEL BEARING MODULE HAVING SUCH A COVER, AND METHOD FOR PRODUCING A COVER FOR MOUNTING ON A WHEEL BEARING
CHAPEAU DESTINÉ À ÊTRE MONTÉ SUR UN ROULEMENT DE ROUE, MODULE DE ROULEMENT DE ROUE PRÉSENTANT LEDIT CHAPEAU ET PROCÉDÉ DE FABRICATION D UN CHAPEAU DESTINÉ À ÊTRE MONTÉ SUR UN ROULEMENT DE ROUE

(30) Priorität: 29.06.2009 DE 102009027277
(43) Veröffentlichungstag der Anmeldung: 09.05.2012
(73) Patentinhaber: Robert Bosch GmbH, 70442 Stuttgart (DE)
(72) Erfinder: WAIBLER, Matthias, 73630 Remshalden-Hebsack (DE)
(86) Internationale Anmeldenummer: PCT/EP2010/055802
(87) Internationale Veröffentlichungsnummer: WO 2011/000592

(56) Entgegenhaltungen:
- EP-A1- 1 707 923
- WO-A1-2007/049602
- DE-A1- 19 528 872
- DE-U1-202005 005 260
- US-A- 5 296 805

## Beschreibung

### Stand der Technik

Die Erfindung betrifft eine Kappe bzw. ein Radlagermodul mit einer solchen Kappe bzw. ein Verfahren zur Herstellung einer Kappe zum Einbau auf ein Radlager nach der Gattung der unabhängigen Patentansprüche.

Aus US 5,814,984 ist eine Lagereinheit mit einem Dichtungskonzept bekannt, bei dem ein einziger Dichtungsring zwei auftretende Leckagepfade zwischen dem Radlager und einer Kappe, die auf das Radlager aufgesteckt wird, und zwar in einer Presspassung, abdichtet. Die Kappe beinhaltet einen Sensor, vorzugsweise einen Drehzahlfühler.

Die DE 20 2005 005 260 U1 offenbart eine Radlagerabdeckklappe gemäß dem Oberbegriff des Anspruches 1 der vorliegenden Erfindung.

### Offenbarung der Erfindung

Die erfindungsgemäße Kappe bzw. das erfindungsgemäße Radlagermodul bzw. das erfindungsgemäße Verfahren zur Herstellung einer solchen Kappe zum Einbau auf ein Radlager haben demgegenüber den Vorteil, dass für den Presssitz an einem Kappenkörper der Kappe wenigstens ein Metallteil vorgesehen ist, das für eine Metall-Metall-Verpressung beim Einbau in das Radlager ermöglicht, indem das wenigstens eine Metallteil gegen das metallene Radlager gepresst wird. Weiterhin ist zwischen dem wenigstens einem Metallteil und dem Kappenkörper ein Dichtungs- und Ausgleichselement vorgesehen. Durch das Vorsehen des Dichtungs- und Ausgleichselements werden Ausdehnungsunterschiede zwischen Metall und Kunststoff des Kappenkörpers kompensiert und auch eine Dichtung zwischen Metall und den Kunststoffteilen sichergestellt. Durch diese in der Kappe innen liegende Position des Dichtungs- und Ausgleichselements ergeben sich folgende Vorteile: Das Dichtungs- und Ausgleichselement kann beim Transport nicht mehr verloren werden. Weiterhin kann das Dichtungs- und Ausgleichselement vor der Montage im Radlager nicht mehr beschädigt werden. Wie aus einem abhängigen Anspruch hervorgeht, wird der Anpressdruck des Dichtungs- und Ausgleichselements nicht bei der Montage der Kappe im Radlager eingestellt, was durch einen Presshub erreicht wird und sehr ungenau sein kann, sondern der Anpressdruck wird beim eigentlichen Sensoraufbau, also der Herstellung der Kappe, fein justiert. Die optimale Verpressung ist somit unabhängig von der Montage im Radlager. Ein weiterer Vorteil ist, die innere Kompensation der unterschiedlichen Temperaturausdehnung zwischen Metall- und Kunststoffteilen. Der weitere Leckagepfad zwischen dem Radlager und dem Metallteil wird durch die Flächenpressung des Metallteils im Radlager sichergestellt. Da vorliegend eine Metall-Metallverbindung zum Einsatz kommt, wird kein elastisches Ausgleichselement mehr benötigt, da keine Temperaturunterschiede vorliegen.

Die Kappe ist zum Einbau auf ein Radlager konfiguriert und schließt es damit gegen äußere Einwirkungen ab. Die Kappe weist einen Kappenkörper auf, der vorwiegend aus Kunststoff hergestellt ist. Weiterhin weist die Kappe einen Sensor, vorzugsweise einen Drehzahlfühler auf, der durch den Kunststoff des Kappenkörpers beispielsweise umspritzt ist. Die Kappe wird selbst für einen Presssitz im Radlager ausgebildet. Erfindungsgemäß ist dieser Presssitz durch eine Metall-Metall-Verpressung beim Einbau realisiert, indem ein Metallteil, das am Kappenkörper vorgesehen ist, mit dem Metall des Radlagers diese Metall-Metallverpressung eingeht. Dieser wenigstens eine Metallteil der Kappe und der Kappenkörper umschließen ein Dichtungs- und Ausgleichselement, das die oben genannten Vorteile realisiert.

Das wenigstens eine Metallteil ist ein Ring, der über den Kappenkörper und auch das Ausgleichs- und Dichtungselement gestülpt wird. Dieser Ring kann insbesondere als Fixierring bezeichnet werden. Dieser Fixierring ist vorzugsweise aus Stahl hergestellt, um die zu erwartenden hohen Einpresskräfte auszuhalten.

Der Ring wird dabei zur Befestigung am Kappenkörper am offenen Ende umbördelt, so dass eine nicht mehr lösbare Verbindung des Kappenkörpers und des Rings hergestellt wird.

Das Dichtungs- und Ausgleichselement kann den Leckage-Pfad, der zwischen dem wenigstens einen Metallteil mithin dem Ring und dem Kappenkörper gebildet wird, axial oder radial abdichten. Auch eine Kombination einer axialen und radialen Abdichtung ist prinzipiell möglich.

Die Kappe ist vorliegend ein Deckel und das Radlager wird vorzugsweise für Fahrzeuge, wie Automobile, eingesetzt.

Unter einem Presssitz wird verstanden, dass die Kappe in das Radlager hineingedrückt wird und durch den Presssitz festgehalten wird.

Das Radlagermodul umfasst vorliegend die Kappe und das Radlager im zusammengebauten Zustand. Dieses Radlagermodul wird dann als Ganzes in das Fahrzeug eingebaut.

Durch die in den abhängigen Ansprüchen angegebenen Maßnahmen und Weiterbildungen sind vorteilhafte Verbesserungen der in den unabhängigen Patentansprüchen angegebenen Gegenstände möglich.

Der Ring kann vorteilhafter Weise, zumindest teilweise, schalenförmig erweitert sein, um einen Hohlraum zwischen dem Ring und dem Kappenkörper zur Aufnahme des Dichtungs- und Ausgleichselements zu bilden.

Vorteilhafter Weise ist das Dichtungs- und Ausgleichselement ein O-Ring, der auf einen Schaft des Kappenkörpers aufgefädelt ist. Darüber wird dann der Ring aus Metall übergestülpt, um den O-Ring zu fixieren.

Durch das wenigstens eine Metallteil mithin dem Ring wird eine vorgegebene Vorspannung auf das Dichtungs- und Ausgleichselement ausgeübt. Damit wird, wie oben ausgeführt, der Anpressdruck an das Dichtungs- und Ausgleichselement fein justiert und ist unabhängig von der Montage der Kappe mit dem Radlager.

Vorteilhafter Weise ist das wenigstens eine Metallteil mit einem Korrosionsschutz beschichtet. Die Beschichtung ist beispielsweise eine sogenannte KTL-Beschichtung. Das ist eine kathoddiche Tauchlackierung zur Aufbringung eines Korrossionsschutzlackes mit anschießender Wärmebehandlung (Tempern oder Einbrennen).

Ausführungsbeispiele der Erfindung sind in der Zeichnung dargestellt und werden in der nachfolgenden Beschreibung näher erläutert.

Es zeigen
Figur 1 eine Ansicht des erfindungsgemäßen Radlagermoduls vor dem zusammengebauten Zustand,
Figur 2 eine Schnittdarstellung eines Teils der erfindungsgemäßen Kappe,
Figur 3 eine Schnittdarstellung eines Teils der erfindungsgemäßen Kappe im auseinander gebauten Zustand,
Figur 4 diesen Teil der Kappe im zusammengebauten Zustand und
Figur 5 diese Kappe mit dem umbördelten Fixierring, der mit dem Radlager verbunden wird,
Figur 6 den Teil der Kappe im zusammengebauten Zustand mit dem Radlager mit einer radialen Abdichtung und
Figur 7 mit einer axialen Abdichtung durch das Abdichtungs- und Ausgleichselement und
Figur 8 ein Flussdiagramm des erfindungsgemäßen Herstellungsverfahrens der Kappe.

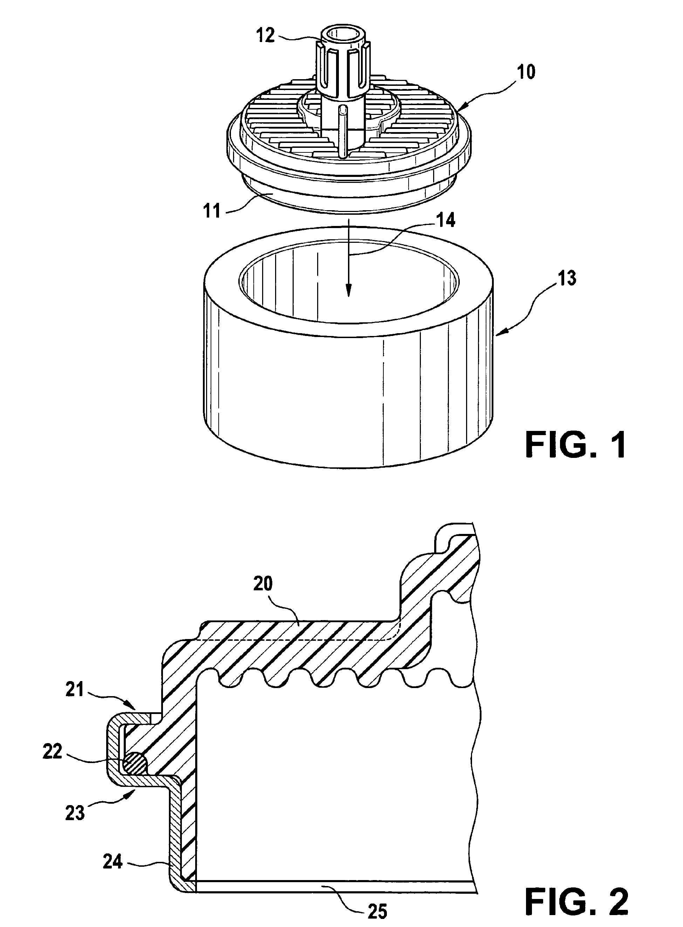

Figur 1 zeigt das erfindungsgemäße Radlagermodul im auseinander gebauten Zustand, d.h. die Kappe 10 ist noch nicht mit dem Radlager 13 durch den Presssitz verbunden. Die Kappe 10, die einen Kappenkörper vorwiegend aus Kunststoff aufweist, bei dem ein Sensor durch diesen Kunststoff umspritzt ist und für den Sensor einen entsprechenden Stecker 12 aufweist, weist weiterhin einen Fixierring 11 auf, der aus Metall gefertigt ist und vorzugsweise einen Korrosionsschutz aufweist. Mit diesem Metallring 11 als Ausführungsbeispiel für das wenigstens eine Metallteil wird mit dem Radlager 13 durch das Hineinführen 14 der Kappe 10 in das Radlager 13 ein Presssitz gebildet, d. h. eine Metall-Metall-Verpressung, die den Leckagepfad zwischen dem Fixierring 11 und dem Radlager 13 abdichtet. Diese Metall-Metall-Verpressung ermöglicht eine temperaturbeständige Verbindung und vermeidet die Verwendung eines elastischen Dichtungs- und Ausgleichselements, um unterschiedliche Ausdehnungskoeffizienten zu kompensieren.

Figur 2 zeigt einen Schnitt durch die erfindungsgemäße Kappe mit dem Kappenkörper 20, dem Fixierring 24, der am offenen Ende umbördelt ist, was durch den Pfeil 21 dargestellt ist und teilweise durch eine Ausweitung eine Art Schale 23 bildet, so dass ein Hohlraum zwischen dem Fixierring 24 und dem Kappenkörper 20 entsteht, in den das Ausgleichs- und Dichtungselement 22, üblicherweise ein O-Ring, eingebracht ist. Durch den Fixierring 24 wird ein vorgegebener Anpressdruck auf den O-Ring 22 gegeben, so dass der O-Ring 22 entweder axial und/oder radial den Leckagepfad zwischen dem Fixierring 24 und dem Kappenkörper 20 abdichtet. Mit dem Bezugszeichen 25 ist der durchgängige Fixierring bezeichnet.

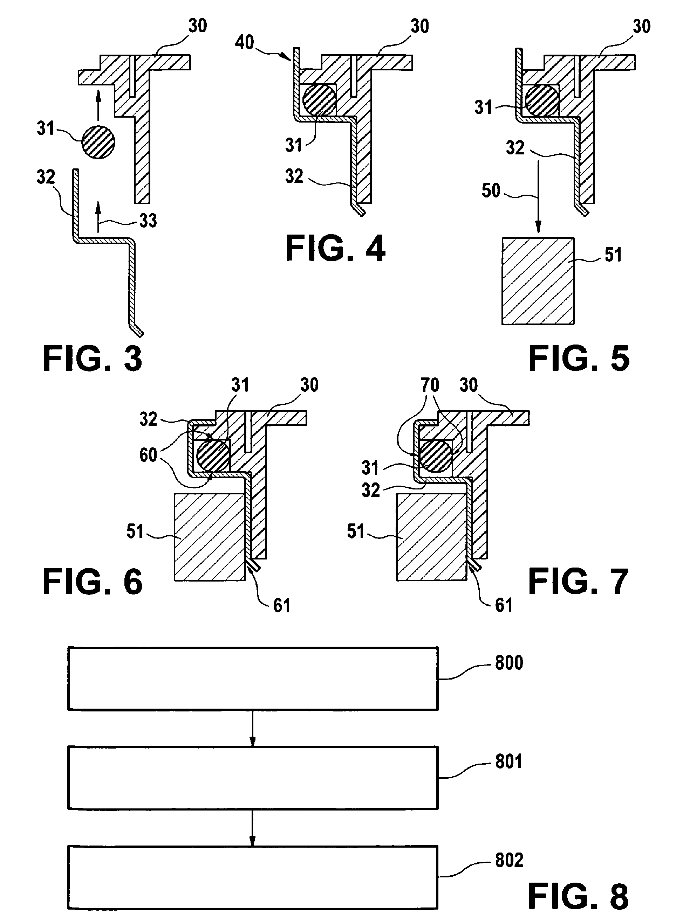

Figur 3 zeigt einen Teil des Kappenkörpers 30 im auseinander gebauten Zustand mit den anderen Teilen, Dichtungs- und Ausgleichselement 31, sowie Fixierring 32, wobei durch die Pfeile 33 die Zusammenbaurichtung angezeigt ist.

In Figur 4 werden gleiche Teile mit gleichen Bezugszeichen bezeichnet und an der Stelle 40 wird am offenen Ende durch eine Umbördelung eine nicht lösbare Verbindung zwischen dem Fixierring 32 und dem Kappenkörper 30 hergestellt, um einen vorgegebenen Anpressdruck auf den Dichtungsring 31 auszuüben. Damit ist eine sehr feine Justage dieses Anpressdrucks möglich.

In Figur 5 wird dargestellt, wie die Kappe mit dem umbördelten Fixierring 32 und dem Dichtungs- und Ausgleichselement 31 im Inneren der Kappe, sowie dem Kappenkörper 30 auf das Radlager 51 in der Richtung 50 eingepresst wird.

Figur 6 zeigt diesen Ausschnitt des Kappenkörpers 30 mit dem Fixierring 32, dem Dichtungs- und Ausgleichselement 31, sowie dem Radlager 51 im zusammengebauten Zustand. Der Leckagepfad 61 wird durch die Metall-Metall-Verpressung zwischen dem Fixierring 32 und dem Radlager 51 gebildet, während das Dichtungs- und Ausgleichselement 31 in radialer Richtung 60 eine Abdichtung des zweiten Leckagepfads vornimmt.

Figur 7 zeigt die Alternative mit einer axialen Abdichtung 70, wobei wiederum gleiche Elemente mit gleichen Bezugszeichen bezeichnet wurden.

Figur 8 zeigt das Herstellungsverfahren der erfindungsgemäßen Kappe. In Verfahrensschritt 800 erfolgt das Umspritzen des Sensors mit Kunststoff, um den Kappenkörper herzustellen. In Verfahrensschritt 801 erfolgt das Aufbringen des Metallrings mithin Fixierrings mit dem O-Ring auf den Kappenkörper. In Verfahrensschritt 802 erfolgt das Umbördeln des Metallrings auf den Kappenkörper, um eine nicht lösbare Verbindung herzustellen. Der O-Ring wird durch das Umbördeln und damit die Fixierung des Metallrings mit einem definierten Anpressdruck versehen und dichtet so zuverlässig den oben genannten zweiten Leckagepfad ab.

## Patentansprüche

1. Kappe zum Einbau auf ein Radlager (51), wobei die Kappe einen Kappenkörper (10) vorwiegend aus Kunststoff und einen Sensor aufweist,
wobei die Kappe für einen Presssitz im Radlager (51) ausgebildet ist,
wobei für den Presssitz an dem Kappenkörper (10) wenigstens ein Metallteil (11) vorgesehen ist, das als ein Ring ausgebildet ist und das eine Metall-Metall-Verpressung beim Einbau in das Radlager ermöglicht, **dadurch gekennzeichnet, dass** zwischen dem wenigstens einen Metallteil (11) und dem Kappenkörper (10) wenigstens ein Dichtungs- und Ausgleichselement (22) vorgesehen ist, wobei der Ring zur Befestigung auf dem Kappenkörper (10) umbördelt ist, und wobei das Dichtungs- und Ausgleichselement (22) axial und/oder radial einen Leckagepfad, der zwischen dem wenigstens einen Metallteil (11) und dem Kappenkörper (10) gebildet ist, abdichtet.

2. Kappe nach Anspruch 1, **dadurch gekennzeichnet, dass** der Ring zumindest teilweise schalenförmig erweitert ist, um einen Hohlraum zwischen dem Ring und dem Kappenkörper (10) zur Aufnahme des Dichtungs- und Ausgleichselements (22) zu bilden.

3. Kappe nach einem der vorhergehenden Ansprüche, **dadurch gekennzeichnet, dass** das Dichtungs- und Ausgleichselement (22) ein 0-Ring ist, der auf einen Schaft des Kappenkörpers (10) aufgefädelt ist.

4. Kappe nach einem der vorhergehenden Ansprüche, **dadurch gekennzeichnet, dass** durch das wenigstens eine Metallteil (11) eine vorgegebene Vorspannung auf das Dichtungs- und Ausgleichselement (22) ausgeübt wird.

5. Kappe nach einem der vorhergehenden Ansprüche, **dadurch gekennzeichnet, dass** das wenigstens eine Metallteil (11) korrosionsbeschichtet ist.

6. Radlagermodul mit einer Kappe nach einem der Ansprüche 1 bis 5.

7. Verfahren zur Herstellung einer Kappe zum Einbau auf ein Radlager (51),
wobei ein Kappenkörper (10) aus Kunststoff und um einen Sensor hergestellt wird, wobei die Kappe für einen Presssitz im Radlager (51) vorbereitet wird, wobei für den Presssitz an dem Kappenkörper (10) wenigstens ein Metallteil (11) angebracht ist, wobei das wenigstens eine Metallteil (11) als ein Ring ausgebildet ist und eine Metall-Metall-Verpressung beim Einbau ermöglicht, **dadurch gekennzeichnet, dass** zwischen dem wenigstens einen Metallteil (11) und dem Kappenkörper (10) wenigstens ein Dichtungs- und Ausgleichselement (22) eingebracht wird, wobei der Ring zur Befestigung auf dem Kappenkörper (10) umbördelt wird, und wobei das Dichtungs- und Ausgleichselement (22) axial und/oder radial einen Leckagepfad, der zwischen dem wenigstens einen Metallteil (11) und dem Kappenkörper (10) gebildet ist, abdichtet.

## Claims

1. Cap for mounting on a wheel bearing (51), wherein the cap has a cap body (10) made predominantly of plastic and a sensor, wherein the cap is configured for a press fit in the wheel bearing (51), wherein at least one metal part (11) is provided on the cap body (10) for the press fit, is in the form of a ring and allows for metal-metal pressing upon mounting in the wheel bearing, **characterized in that** at least one sealing and compensating element (22) is provided between the at least one metal part (11) and the cap body (10), wherein the ring is flanged for fastening on the cap body (10), and wherein the sealing and compensating element (22) axially and/or radially seals off a leakage path which is formed between the at least one metal part (11) and the cap body (10).

2. Cap according to Claim 1, **characterized in that** the ring is expanded at least in parts like a shell in order to form a hollow space between the ring and the cap body (10) for receiving the sealing and compensating element (22).

3. Cap according to either of the preceding claims, **characterized in that** the sealing and compensating element (22) is an O ring threaded onto a shaft of the cap body (10).

4. Cap according to one of the preceding claims, **characterized in that** the at least one metal part (11) exerts a predefined prestress on the sealing and compensating element (22).

5. Cap according to one of the preceding claims, **characterized in that** the at least one metal part (11) is provided with an anti-corrosion coating.

6. Wheel bearing module having a cap according to one of Claims 1 to 5.

7. Method for producing a cap for mounting on a wheel bearing (51), wherein a cap body (10) is produced from plastic and around a sensor, wherein the cap is prepared for a press fit in the wheel bearing (51), wherein at least one metal part (11) is fitted to the cap body (10) for the press fit, wherein the at least one metal part (11) is in the form of a ring and allows for metal-metal pressing upon mounting, **characterized in that** at least one sealing and compensating element (22) is introduced between the at least one metal part (11) and the cap body (10), wherein the ring is flanged for fastening on the cap body (10), and wherein the sealing and compensating element (22) axially and/or radially seals off a leakage path which is formed between the at least one metal part (11) and the cap body (10).

## Revendications

1. Capuchon destiné à être monté sur un palier de roue (51),
le capuchon présentant un corps (10) constitué principalement de matière synthétique et un détecteur,
le capuchon étant configuré pour être serti dans le palier de roue (51),
au moins une partie métallique (11) configurée en anneau et permettant une compression métal-métal lors du montage dans le palier de roue étant prévue pour le sertissage sous pression sur le corps de capuchon (10), **caractérisé en ce que**
au moins un élément d'étanchéité et de compensation (22) est prévu entre la ou les parties métalliques (11) et le corps de capuchon (10),
l'anneau étant rabattu pour être fixé sur le corps de capuchon (10),
l'élément d'étanchéité et de compensation (22) assurant l'étanchéité axiale et/ou radiale d'un parcours de fuite formé entre la ou les parties métalliques (11) et le corps du capuchon (10).

2. Capuchon selon la revendication 1, **caractérisé en ce que** l'anneau est évasé au moins en partie en coquille pour former une cavité entre l'anneau et le corps de capuchon (10) qui sert à reprendre l'élément d'étanchéité et de compensation (22).

3. Capuchon selon l'une des revendications précédentes, **caractérisé en ce que** l'élément (22) d'étanchéité et de compensation est un anneau torique enfilé sur une tige du corps de capuchon (10).

4. Capuchon selon l'une des revendications précédentes, **caractérisé en ce qu'**une précontrainte prédéterminée est exercée par la ou les pièces métalliques (11) sur l'élément (22) d'étanchéité et de compensation.

5. Capuchon selon l'une des revendications précédentes, **caractérisé en ce que** la ou les parties métalliques (11) sont dotées d'un revêtement anti-corrosion.

6. Module de palier de roue doté d'un capuchon selon l'une des revendications 1 à 5.

7. Procédé de fabrication d'un capuchon destiné à être monté sur un palier de roue (51), dans lequel
un corps de capuchon (10) en matière synthétique est réalisé autour d'un capteur,
le capuchon étant prévu pour être serti sous pression dans le palier de roue (51),
au moins une pièce métallique (11) étant appliquée sur le corps de capuchon (10) pour assurer le sertissage sous pression,
la ou les parties métalliques (11) étant configurées en anneau et permettant une compression métal-métal lors du montage,
**caractérisé en ce que**
au moins un élément (22) d'étanchéité et de compensation est placé entre la ou les parties métalliques (11) et le corps de capuchon (10),
l'anneau étant rabattu pour être fixé sur le corps du capuchon (10),
l'élément (22) d'étanchéité et de compensation assurant l'étanchéité axiale et/ou radiale d'un parcours de fuite formé entre la ou les parties métalliques (11) et le corps de capuchon (10).
